# EUROPÄISCHE PATENTSCHRIFT

(11) **EP 1 580 521 B1**
(45) Veröffentlichungstag und Bekanntmachung des Hinweises auf die Patenterteilung: **07.08.2013**
(21) Anmeldenummer: 05005759.5
(22) Anmeldetag: 16.03.2005
(51) Int. Cl.: G01B 11/00

(54) **Koordinatenmessgerät mit Wechseloptik**
Coordinate maeasuring machine with interchangeable lenses
Appareil de mesure de coordonnées à lentilles interchangeables

(30) Priorität: 23.03.2004 DE 102004014153
(43) Veröffentlichungstag der Anmeldung: 28.09.2005
(73) Patentinhaber: Werth Messtechnik GmbH, 35394 Giessen (DE)
(72) Erfinder: Armlich, Gerhard c/o IBTL Ing. Büro, 76456 Kuppenheim (DE)
(74) Vertreter: Stoffregen, Hans-Herbert

(56) Entgegenhaltungen:
- EP-A- 0 362 625
- US-A- 4 561 776

## Beschreibung

Die vorliegende Erfindung betrifft ein Koordinatenmessgerät mit Wechseloptik und insbesondere ein Wechseloptiksystem für Koordinatenmessgeräte mit Lasersensor-Technik.

Koordinatenmessgeräte dienen beispielsweise zur Abtastung von Werkstückoberflächen in der Metallverarbeitung insbesondere zur Bestimmung der Oberflächenqualität und Maßhaltigkeit des jeweiligen Werkstücks. Aus dem Stand der Technik sind eine Vielzahl von Koordinatenmessgeräten bekannt, mittels denen auf möglichst einfache Weise unterschiedliche Messungen beispielsweise von Werkstückoberflächen, Aushöhlungen (Bohrungen) oder auch Hinterschneidungen durchführbar sind.

Beispielsweise aus der DE 44 45 331 A1 ist ein Koordinatenmessgerät mit einem automatischen Multisensormesskopf bekannt, der aus einer Trägerplatte besteht, auf der eine Anzahl unterschiedlich geformter mechanischer Abtastvorrichtungen (Sensoren) gelagert sind. Diese sind individuell mittels zugehöriger Linearantriebe in eine Abtastposition bzw. eine Rastposition verfahrbar, sodass je nach Art der abzutastenden Oberfläche oder je nach Art des Werkstücks (Innenbohrung, äußere plane Fläche, Zylindermantel und dgl.) der jeweils geeignete Sensor in seine Abtastposition gebracht werden kann, ohne dass dieser von den anderen Sensoren während des Abtastvorgangs behindert wird.

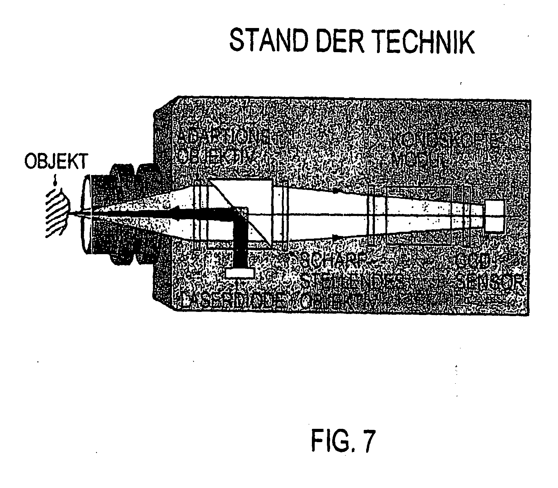

Mechanische Sensoren werden neuerdings zunehmend durch berührungslos arbeitende Sensoren vorzugsweise basierend auf Lasertechnologie ersetzt. Mit sogenannten linearen konoskopischen (holografischen) Lasersensoren lässt sich ein konoskopisches Interferogramm eines Gegenstands oder Werkstücks erzeugen, welches mittels einer CCD Kamera aufgezeichnet werden kann. Der Vorteil dieser bekannten Technik besteht darin, dass lediglich nur eine einzige Kamera für das Bestimmen der Kontur des abzutastenden Objekts erforderlich ist, ohne dass die Notwendigkeit der Anordnung beispielsweise eines Referenzstrahls besteht. Im Stand der Technik ist ein derartiger konoskopischer Holograf der Firma "OPTIMET" unter der Bezeichnung "CONOPROBE" bekannt geworden, wie er prinzipiell in der anliegenden Fig. 7 dargestellt ist.

Bei diesem bekannten Sensor handelt es sich demzufolge um einen berührungslosen Einpunkt-Lasersensor basierend auf einer konoskopischen Holografietechnik. Er besitzt eine Laserdiode, deren ausgesendeter Laserstrahl über eine Prismen- oder Spiegeleinrichtung in Richtung eines an einem Gehäuse montierten Objektivs umgelenkt und auf die Oberfläche eines abzutastenden Objekts fokussiert wird. Von dort wird der Laserstrahl in den Sensor zurück reflektiert, mittels einer Scharfstelllinse auf ein Konoskopiemodul fokussiert und schließlich durch eine CCD Kamera/Sensor aufgezeichnet. Wie aus dieser Beschreibung ersichtlich ist, wird der bekannte Lasersensor zur Abtastung beispielsweise von Werkstückoberflächen eingesetzt, welche von Außen mit dem Laser erreichbar sind. Durch Wechseln des Objektivs kann jedoch der Arbeitsbereich des Sensors gesteigert werden. Es hat sich dabei indessen gezeigt, dass insbesondere Lasersensoren der vorstehenden Bauart nur sehr zeitaufwendig auf unterschiedliche Arbeitsbereiche durch entsprechendes Austauschen der Linsen und Optiken umgestellt werden können.

Der US-A-4 561 776 ist ein elektrooptischer Sensor zu entnehmen, der aus einem Magazin mittels eines Roboters entnommen und in einen Maschinenkopf eingesetzt wird. Der Messstrahl des Sensors verläuft in Längsachsenrichtung des Sensors.

Ein Koordinatenmessgerät mit einem optischen Tastkopf ist aus der EP-A-0 362 625 bekannt. Der Tastkopf weist eine auswechselbare Frontoptik auf, die eine Beleuchtungsoptik enthält. Entlang der Längsachse des Tastkopfs verläuft der Messstrahl.

Der vorliegenden Erfindung liegt daher die Aufgabe zugrunde, ein Wechseloptiksystem für Koordinatenmessgeräte dieser Gattung zu schaffen, welches die Flexibilität und Effizienz des Koordinatenmessgeräts erhöht.

Diese Aufgabe wird durch ein Wechseloptiksystem mit den Merkmalen des anliegenden Patentanspruchs 1 gelöst. Demzufolge besteht das erfindungsgemäße Wechseloptiksystem im wesentlichen aus einer Anzahl von Wechseloptiken vorzugsweise mit unterschiedlichen Laserstrahlaustrittswinkeln, wobei die Wechseloptik ein Adapterstück für das Anschließen an das Koordinatenmessgerät hat, an das Adapterstück schließt sich ein Rohrelement oder ein Aufnahmesockel an, das/der sich in Laseraustrittsrichtung des Koordinatenmessgeräts erstreckt und das/der an seinem distalen Ende eine Umlenkeinrichtung für ein Umlenken des Laserstrahls unter einem vorbestimmten Winkel trägt.

Vorzugsweise hat das Adapterstück einen Permanentmagneten, um ein schnelles Montieren der Optik am Gehäuse des Koordinatengeräts zu ermöglichen.

Weiter vorzugsweise sind die Wechseloptiken in einem Magazin gebunkert, wodurch ein vorzugsweise rechnergesteuerter (automatisierter) Zugriff auf die einzelnen Optiken erreicht werden kann.

Weitere vorteilhafte Ausgestaltungen sind Gegenstand der übrigen Unteransprüche.

Die Erfindung wird nachstehend anhand bevorzugter Ausführungsbeispiele unter Bezugnahme auf die begleitenden Zeichnungen näher erläutert.

Es zeigen
Fig. 1 den Seitenriss einer Wechseloptik gemäß einem ersten bevorzugten Ausführungsbeispiel der Erfindung,
Fig. 2 die aufgebrochene Perspektivenansicht der Wechseloptik gemäß Fig. 1,
Fig. 3 bis 5 jeweils die aufgebrochene Perspektivenansicht weiterer drei Ausführungsbeispiele der Erfindung,
Fig. 6 die Draufsicht auf die Anschlussstirnseite der erfindungsgemäßen Wechseloptik und
Fig. 7 den prinzipiellen Seitenschnitt eines Lasersensors gemäß dem Stand der Technik.

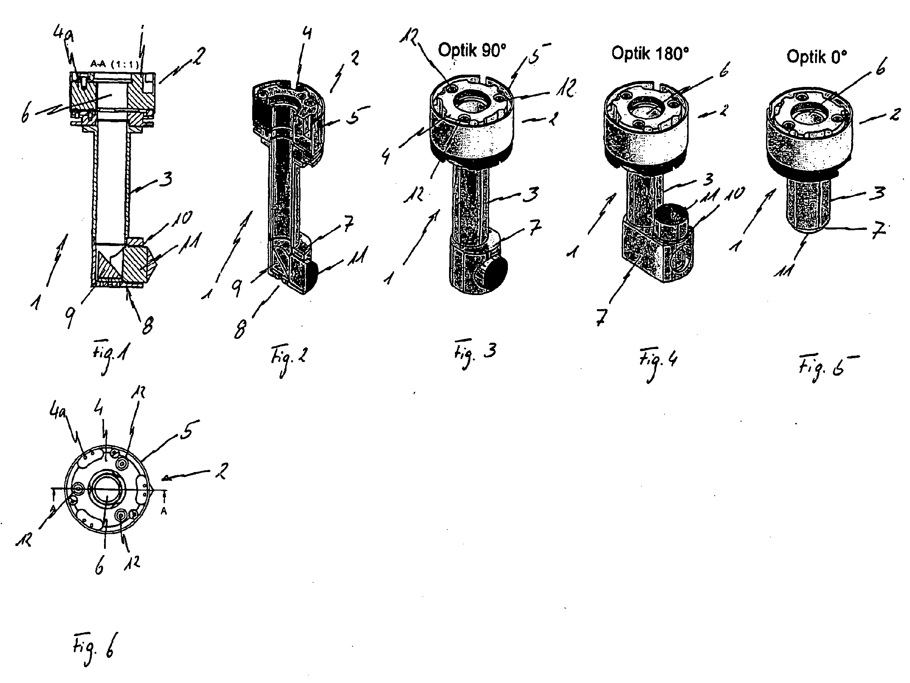

Gemäß der Fig. 1 besteht die Wechseloptik 1 gemäß einem ersten bevorzugten Ausführungsbeispiel der Erfindung im wesentlichen aus einem Adapterstück 2 für das Anschließen der jeweiligen Wechseloptik 1 an ein (in den Figuren nicht weiter gezeigtes) Koordinatenmessgerät, an dem ein Rohrelement 3 oder ein Aufnahmesockel angeordnet ist. Das Adapterstück 2 ist vorliegend aus einem magnetischen Kern oder Permanentmagneten 4 (siehe Fig. 6) gebildet, der in ein zylinderförmiges Gehäuse 5 eingesetzt ist. Zusätzlich ist ein zu dem Permanentmagnet gegenpoliger Elektromagnet 4a im Adapterstück 2 angeordnet, der lediglich für die Demontage der Wechseloptik 1 vom Messgerätegehäuse eingeschaltet wird und dabei eine Abstoßkraft ausübt, welche die Anziehungskraft des Permanentmagneten 4 überlagert. Im Adapterstück 2 ist eine zentrale Durchgangsbohrung 6 ausgebildet, deren Ausrichtung und Dimensionierung der Austrittsöffnung des bereits bekannten Koordinatenmessgeräts angepasst ist. In anderen Worten ausgedrückt ist die Art und der Aufbau insbesondere des Adapterstücks 2 in Abhängigkeit des damit zu bestückenden Koordinatenmessgeräts gewählt und kann daher bei verschiedenen Koordinatenmessgeräten voneinander abweichen.

An dem Adapterstück 2 ist stirnseitig, d.h. an seinem der Montageseite abgewandten Seite das Rohrelement 3 angeflanscht. Die Länge des Rohrelements 3 ist anwendungsbezogen bemessen und kann von Optik zu Optik unterschiedlich sein. Am distalen Ende des Rohrelements 3 befindet sich eine Aufnahme 7 für eine Laserstrahl-Umlenkvorrichtung 8. Diese besteht vorliegend aus einem zum Rohrelement 3 schräg ausgerichteten Spiegel oder einem Prisma 9, der/das so ausgebildet ist, dass ein durch das Rohrelement 3 geleiteter einfallender Laserstrahl unter einem bestimmten Winkel ab- bzw. umgelenkt wird. In der Aufnahme befindet sich eine Laserstrahl-Austrittsöffnung 10, die so ausgerichtet ist, dass der bereits ab- bzw. umgelenkte Laserstrahl durch diese nach Außen geleitet wird. In der Austrittöffnung 10 selbst befindet sich vorzugsweise ein weiteres Linsensystem bzw. Optik 11 zur Fokussierung des austretenden Laserstrahls auf ein abzutastendes Objekt.

In den Fig. 3 bis 5 sind erfindungsgemäße Wechseloptiken 1 mit unterschiedlichen Austrittswinkeln gezeigt. Demnach sind Wechseloptiken mit Austrittswinkeln von 0°, 90° sowie 180° bezüglich des Lasereinfallwinkels vorgesehen, wobei natürlich auch andere Ausfallwinkel je nach Anwendungsfall möglich sind. Optional kann auch die Anflanschstelle zwischen dem Adapterstück 2 und dem Rohrelement 3 und/oder die Verbindungsstelle zwischen dem Rohrelement 3 und der Aufnahme 7 drehbar ausgeführt sein, wodurch eine Rotation des Rohrelements 3 und/oder der Aufnahme 7 um dessen/deren Hochachse bei feststehendem Adapterstück 2 möglich wird.

Im vorliegenden Fall ist das Rohrelement 3 über drei Schrauben 12 (siehe beispielsweise Fig. 3 bis 6) an das Adapterstück 2 montiert, welche gleichzeitig als Zentriereinrichtungen dienen. Nach Lösen der drei Schrauben 12 kann das Rohrelement 3 vorliegend in einem 1/3 Kreisschritt gedreht und anschließend wieder durch Festziehen der Schrauben 12 fixiert werden. Je nach Anflanschkonstruktion ist auch eine kontinuierliche Verdrehung möglich.

Auch ist es denkbar, die Aufnahme 7 schwenkbar am distalen Ende des Rohrstücks 3 zu lagern, derart, dass bei einer scharnierartigen Verschwenkung der Aufnahme 7 die darin befindliche Umlenkvorrichtung mit verschwenkt und damit der Laseraustrittswinkel gerastet oder kontinuierlich verstellbar ist.

Wie eingangs bereits ausgeführt wurde, ist eine magnetisch bewirkte Montage der Wechseloptik 1 am Koordinatenmessgerät insofern vorteilhaft, als dass hierdurch ein schneller Wechsel der Optik 1 ohne Lösen und Schließen von Verschlüssen oder Schrauben ermöglicht wird, wobei darüber hinaus eine Magnet-Montage äußerst universell durchführbar ist, solange das nicht gezeigte Gehäuse des Koordinatenmessgeräts zumindest im Anschlussbereich der Wechseloptik 1 aus einem Metallmaterial besteht oder mit einem Metallteil versehen ist. Jedoch ist alternativ auch ein Bajonett- oder Steckverschluss denkbar.

Auch ist es optional möglich, die Wechseloptik 1 im Bereich des Adapterstücks 2 oder innerhalb des sich daran anschließenden Rohrelements 3 mit einer weiteren Optik bzw. Linseneinheit auszurüsten, welche an das zu bestückende Koordinatenmessgerät angepasst ist.

Um einen schnellen Wechsel der Optik 1 und damit ein schnelles Umrüsten des Koordinatenmessgeräts auf einen anderen Anwendungszweck auch rechnergestützt zu erreichen, sind unterschiedliche Optiken 1 gemäß der Erfindung in einem Magazin gelagert und können so beispielsweise durch eine nicht weiter dargestellte Bestückungseinrichtung wahlweise entnommen und an der Laserstrahl-Austrittöffnung des Koordinatenmessgeräts montiert werden.

Die vorliegende Erfindung betrifft ein Wechseloptiksystem für Koordinatenmessgeräte mit Lasersensor-Technik bestehend aus einer Anzahl von Wechseloptiken mit unterschiedlichen Laserstrahlaustrittswinkeln, von denen jede Wechseloptik ein Adapterstück für das Anschließen der jeweiligen Wechseloptik an das Koordinatenmessgerät hat, an das sich ein Rohrelement oder ein Aufnahmesockel anschließt, das/der sich in Laseraustrittsrichtung aus dem Koordinatenmessgerät erstreckt und an seinem distalen Ende eine Umlenkeinrichtung für ein Umlenken des Laserstrahls unter einem vorbestimmten Winkel trägt.

## Patentansprüche

1. Wechseloptiksystem für Koordinatenmessgeräte mit Einpunkt-Lasersensor-Technik bestehend aus einer Anzahl von Wechseloptiken (1), von denen jede Wechseloptik (1) ein Adapterstück (2) für das Anschließen der jeweiligen Wechseloptik (1) an das Koordinatenmessgerät hat, an das sich ein Rohrelement (3) oder ein Aufnahmcsockel anschließt, das/der sich in Laseraustrittsrichtung des Koordinatenmessgeräts erstreckt und an seinem distalen Ende eine Ab- oder Umlenkeinrichtung (8) für ein Ab- /Umlenken des aus dem Rohrelement / dem Adapter austretenden Laserstrahls unter einem vorbestimmten Winkel trägt.

2. Wechseloptiksystem nach Anspruch 1, **dadurch gekennzeichnet, dass** die unterschiedlichen Wechseloptiken (1) Austrittswinkel von 0°, 90° und 180° aufweisen.

3. Wechseloptiksystem nach einem der vorstehenden Ansprüche, **dadurch gekennzeichnet, dass** das Adapterstück (2) mit einem Schnellverschluss vorzugsweise einem Bajonett- oder Steckverschluss für das Montieren an dem Koordinatenmessgerät versehen ist.

4. Wechseloptiksystem nach einem der vorstehenden Ansprüche, **dadurch gekennzeichnet, dass** das Adapterstück (2) mit einem Permanentmagneten (4) ausgerüstet ist, der mit einem Gehäuse oder Gehäuseteil des Koordinatenmessgeräts für die Montage der Wechseloptik in Hafteingriff bringbar ist.

5. Wechseloptiksystem nach einem der vorstehenden Ansprüche, **dadurch gekennzeichnet, dass** das Adapterstück (2) mit einer Zentriervorrichtung ausgebildet ist für ein Zentrieren der Wechseloptik (1) bezüglich der Austrittsrichtung und Austrittsstelle des Laserstrahls aus dem Koordinatenmessgerät.

6. Wechseloptiksystem nach einem der vorstehenden Ansprüche, **dadurch gekennzeichnet, dass** die Ab-/Umlenkeinrichtung (8) ein Prisma oder Spiegel (9) aufweist, der in einem Aufnahmeteil (7) am distalen Ende des Rohrelements oder Aufnahmesockels (3) fixiert ist.

7. Wechseloptiksystem nach einem der vorstehenden Ansprüche, **dadurch gekennzeichnet, dass** die Umlenkeinrichtung (8) eine Linse oder ein Linsensystem (11) für ein Fokussieren des ab-/umgelenkten Laserstrahls auf ein abzutastendes Objekt aufweist.

8. Wechseloptiksystem nach einem der vorstehenden Ansprüche, **gekennzeichnet durch** ein Magazin zur Aufnahme und Bereitstellung von Wechseloptiken (1) vorzugsweise mit unterschiedlichen Austrittswinkeln und/oder unterschiedlichen Rohrelementlängen.

## Claims

1. Interchangeable lens system for coordinate measuring devices with single-point laser sensor technology, comprising a number of interchangeable lenses (1) where each interchangeable lens (1) has an adapter piece (2) for connecting the respective interchangeable lens (1) to the coordinate measuring device which is in contact with a tube element (3) or a receptacle socket extending in the laser exit direction of the coordinate measuring device and carrying at its distal end a deflecting or diverting device (8) for deflecting/diverting the laser beam exiting the tube element / adapter at a predetermined angle.

2. Interchangeable lens system according to Claim 1, wherein the differing interchangeable lenses (1) have an exit angle of 0°, 90° and 180°.

3. Interchangeable lens system according to one of the preceding claims, wherein the adapter piece (2) is provided with a quick-action closure, preferably a bayonet or plug-in connection for fitting to the coordinate measuring device.

4. Interchangeable lens system according to one of the preceding claims, wherein the adapter piece (2) is equipped with a permanent magnet (4) which can be brought into gripping engagement with a housing or housing part of the coordinate measuring device for fitting of the interchangeable lens.

5. Interchangeable lens system according to one of the preceding claims, wherein the adapter piece (2) is designed with a centering device for centering the interchangeable lens (1) with regard to the exit direction and exit point of the laser beam from the coordinate measuring device.

6. Interchangeable lens system according to one of the preceding claims, wherein the deflecting/diverting device (8) has a prism or mirror (9) fixed in a receptacle part (7) on the distal end of the tube element or receptacle socket (3).

7. Interchangeable lens system according to one of the preceding claims, wherein the diverting device (8) has a lens or a lens system (11) for focusing the deflected/diverted laser beam onto an object to be scanned.

8. Interchangeable lens system according to one of the preceding claims, **characterized by** a magazine for receiving and holding in readiness interchangeable lenses (1), preferably with differing exit angles and/or differing tube element lengths.

## Revendications

1. Système d'optiques interchangeables pour appareils de mesure de coordonnées dotés de la technologie à capteur laser monopoint, constitué d'une pluralité d'optiques interchangeables (1), dont chaque optique interchangeable (1) a un adaptateur (2) destiné à raccorder ladite optique interchangeable (1) à l'appareil de mesure de coordonnées et auquel se raccorde un élément tubulaire (3) ou un socle de réception qui s'étend dans la direction de sortie du rayon laser de l'appareil de mesure de coordonnées et porte à son extrémité distale un dispositif de déviation ou de détournement (8) destiné à dévier/détourner selon un certain angle prédéfini le rayon laser sortant de l'élément tubulaire / de l'adaptateur.

2. Système d'optiques interchangeables selon la revendication 1, **caractérisé en ce que** les différentes optiques interchangeables (1) présentent des angles de sortie de 0°, 90° et 180°.

3. Système d'optiques interchangeables selon l'une des revendications précédentes, **caractérisé en ce que** l'adaptateur (2) est muni d'un raccord rapide, de préférence un joint à baïonnette ou à emboîtement, pour le montage sur l'appareil de mesure de coordonnées.

4. Système d'optiques interchangeables selon l'une des revendications précédentes, **caractérisé en ce que** l'adaptateur (2) est équipé d'un aimant permanent (4) qui peut être mis en prise par adhérence avec un boîtier ou une partie de boîtier de l'appareil de mesure de coordonnées pour le montage de l'instrument optique.

5. Système d'optiques interchangeables selon l'une des revendications précédentes, **caractérisé en ce que** l'adaptateur (2) est conçu avec un dispositif de centrage pour centrer l'optique interchangeable (1) par rapport à la direction de sortie et au point de sortie du rayon laser hors de l'appareil de mesure de coordonnées.

6. Système d'optiques interchangeables selon l'une des revendications précédentes, **caractérisé en ce que** le dispositif de déviation/détournement (8) présente un prisme ou un miroir (9) qui est fixé dans un logement (7) à l'extrémité distale de l'élément tubulaire ou du socle de réception (3).

7. Système d'optiques interchangeables selon l'une des revendications précédentes, **caractérisé en ce que** le dispositif de détournement (8) est une lentille ou un système de lentilles (11) destiné(e) à focaliser le rayon laser dévié/détourné sur un objet à balayer.

8. Système d'optiques interchangeables selon l'une des revendications précédentes, **caractérisé par** un magasin destiné à loger et à mettre à disposition des optiques interchangeables (1) ayant de préférence des angles de sortie différents et/ou des éléments tubulaires de différentes longueurs.
